(19) Europäisches Patentamt
European Patent Office
Office européen des brevets

(11) EP 4 178 052 A1

(12) EUROPEAN PATENT APPLICATION

(43) Date of publication:
10.05.2023 Bulletin 2023/19

(21) Application number: 21383000.3

(22) Date of filing: 05.11.2021

(51) International Patent Classification (IPC):
H01S 5/062 (2006.01)        G06F 7/58 (2006.01)
H01S 5/183 (2006.01)        H04L 9/08 (2006.01)

(52) Cooperative Patent Classification (CPC):
H01S 5/06213; G06F 7/588; H01S 5/183;
H04L 9/0861

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicants:
• Quside Technologies S.L.
08860 Barcelona (ES)
• Politecnico di Milano
20133 Milano (IT)

(72) Inventors:
• Abellan, Carlos
08860 Barcelona (ES)

• Amaya, Waldimar
08860 Barcelona (ES)
• Tulli, Domenico
20133 Milan (IT)
• Rudé, Miquel
08860 Barcelona (ES)
• Martínez, Sofía
08860 Barcelona (ES)
• Longhi, Stefano
20133 Milan (IT)

(74) Representative: Grünecker Patent- und
Rechtsanwälte
PartG mbB
Leopoldstraße 4
80802 München (DE)

(54) METHOD AND DEVICE FOR GENERATING RANDOM NUMBERS

(57) Method for generating random numbers, the method comprising driving, using a power source (105) and a control unit (151) controlling the power source, a surface emitting laser (101) in direct modulation mode so that the surface emitting laser is alternatingly driven below and above the lasing threshold (LS) so that laser pulses are emitted from the surface emitting laser, wherein, for driving the surface emitting laser above the lasing threshold, a current is chosen so that the surface emitting laser to work within a bistability zone of the surface emitting laser with energy carried substantially by one of two distinct laser modes (M1, M2). The laser modes are separated by a mode separator (102) that allows one (M1) of the two distinct laser modes to propagate to a photodetector (103). The method comprises detecting, by a photodetector (103), the laser pulses and generating random numbers from the detected laser pulses.

FIG. 1

**Description**

The present disclosure pertains to a method for generating random numbers in line with claim 1 and a random number generator comprising a surface emitting laser in line with independent claim 11.

**Prior art**

Surface emitting lasers, also known as SELs, have been employed in data transmission technologies for some time now.

Surface emitting lasers are lasers where the laser light is emitted from one surface of the semiconductor chip constituting the laser diode. This is in contrast to the characteristics of edge-emitting lasers which emit the laser light from edges of the semiconductor chip.

One specific example of such surface emitting lasers are vertical cavity surface emitting lasers, also known as VCSELs.

Due to the physical properties of the surface emitting lasers in general or more specifically VCSELs, they are specifically suitable for and are commonly used in communication technologies where their characteristic of emitting laser light in a single mode is specifically advantageous when coupling laser pulses into glass fibre cables.

Likewise, as the VCSELs can be switched on and off very fast, they are specifically suitable for optical transmission of large amounts of data in short time.

Furthermore, physical systems for generating random numbers have now been employed for some time. These systems make use of inherent randomness of physical characteristics, like a phase relation of two lasers. In some of these systems, one of the lasers can be driven in constant mode, that is, in a mode where it constantly emits laser light, whereas the other laser is driven at pulse mode, alternatingly close below and above the lasing threshold. The switching of this second laser results in a random phase relation between the first laser and the second laser, thereby allowing for reliably obtaining random numbers.

Such systems are, however, comparably complex and require a plurality of components in order to obtain the random numbers which can also result in difficulties in reliably controlling the systems to ensure randomness.

**Technical Problem**

Starting from the known prior art, the technical problem addressed by the invention is to provide a means that allows for reliably obtaining random numbers at comparably low costs, while the complexity of the system and the method of obtaining the random numbers is reduced.

**Solution**

This problem is solved by the method for generating random numbers according to independent claim 1 and a random number generator comprising vertical cavity surface emitting laser in line with independent claim 11. Preferred embodiments of the invention are provided in the dependent claims.

The method for generating random numbers according to the invention comprises driving, using a power source and a control unit controlling the power source, a surface emitting laser in direct modulation mode, wherein the direct modulation mode is controlled by the control unit so that the surface emitting laser is alternatingly driven below and above the lasing threshold so that laser pulses are emitted from the SEL, wherein, for driving the surface emitting laser above the lasing threshold, a current is chosen so that the surface emitting laser works within a bistability zone of the surface emitting laser, and wherein the method comprises detecting, by a photodetector, the laser pulses emitted by the surface emitting laser and generating random numbers from the detected laser pulses.

The surface emitting laser may be considered to encompass any laser or laser diode that emits laser light from a surface of the laser, in contrast to edge-emitting lasers that emit laser light from edges of the semiconducting material.

In the context of the present invention, the bistability zone is to be understood as a mode or regime of driving the surface emitting laser with a current or in a current regime that causes the surface emitting laser to arbitrarily emit a laser pulse in one of two distinct laser modes. The laser modes can vary, for example, with respect to their polarisation or a mean frequency or any other physical characteristic. The way in which the two distinct laser modes differ from each other may specifically depend on physical characteristics of the surface emitting laser emitting the laser pulse.

The current regime in which the surface emitting laser works within its bistability zone is dependent on the physical properties of the surface emitting laser like, for example, dichroism and birefringence characteristics.

It is a finding of the present invention that a commonly available surface emitting laser that is structurally designed to only emit a single laser mode when being driven in its usual power regime can also be driven at a different power regime where mode suppressing components of the surface emitting laser do not suppress all but a single mode, thus resulting in the surface emitting laser, when driven according to the inventive concept, arbitrarily emitting a laser pulse in either one laser mode or another laser mode. The detected signals can be used to generate truly random numbers requiring only a single surface emitting laser.

By employing the method according to the invention, a commonly available surface emitting laser can be used for generating random numbers, which does not only result in reduced costs of the random number generator but can further reduce the complexity of the system.

Specifically, the surface emitting laser emits laser pulses with energy carried substantially by one of two distinct laser modes. When the surface emitting laser is driven in its bistability zone, the surface emitting laser will emit a laser pulse where the full (or almost the full) energy of the laser pulse is carried by one of the two distinct laser modes. Thereby, a translation of the signals emitted by the surface emitting laser into digital signals can be performed efficiently, as the output is already discrete in relation to the energy carried by each of the laser modes.

It can further be provided that the laser pulses pass, after being emitted from the surface emitting laser and before being detected by the photodetector, a mode separator that separates the two distinct laser modes and allows one of the two distinct laser modes to propagate to the photodetector.

Specifically, the mode separator can be arranged and configured to result in different propagation directions of the laser pulse, depending on the mode that carries the laser pulse.

With this embodiment, a separation of the two laser modes arbitrarily emitted by the surface emitting laser before reaching the photodetector is achieved. Thereby, it is ensured that only one of the modes reaches the photodetector and, depending on which mode is actually emitted by the surface emitting laser, the photodetector recognises either the mode arriving at the photodetector or does not detect a signal at all. In this context, it is noted that this only holds for a perfectly working mode separator. That the photodetector only detects the single mode that is propagated through the mode separator or that the photodetector does not at all detect any signal is construed to encompass cases where also the second mode that is separated away by the mode separator at least partially propagates to the photodetector and generates a signal that is, however, significantly below the signal that would be detected if the other mode is detected at the photodetector.

In one embodiment, a switching time for switching between the driving of the surface emitting laser below the lasing threshold and the driving of the surface emitting laser above the lasing threshold is between 100 ps and 10 ns, or between 2ns and 100ns, or between 2ns and 50ns, or between 5ns and 15ns. The switching time is the time required for increasing the current applied to the surface emitting laser from a value below the lasing threshold to a value above the lasing threshold in which the surface emitting laser works in the bistability zone (or vice versa). The switching time has to be short enough for the pulse emitted by the SEL to be random.

In a further embodiment, the surface emitting laser is driven above the lasing threshold for a lasing period of 2ns to 50ns or 5ns to 25ns or 5ns to 20ns.

These pulse durations, i.e. the time for which the surface emitting laser is driven above the lasing threshold, results, in a large number of pulses per second, making the generation of random numbers with a frequency of several MHz up to some GHz possible.

In one embodiment, the method further comprises sampling a signal output by the photodetector upon detecting the laser pulse and wherein the sampling of the signal of the photodetector is started after a delay period has passed from the point in time where the surface emitting laser starts emitting the laser pulse.

The sampling can be done by a digitization unit that translates the signal received from the photodetector (for example a voltage or a current) into digital values, i.e. 1s and 0s. This can be achieved by using, for example, an analogue-to-digital converter that compares the signal received from the photodetector to a threshold. If the signal of the photodetector is larger than the threshold, the digitization unit may output a value "1 and in case the signal of the photodetector is smaller than the threshold, the digitization unit may output a value of "0", or vice versa.

By not beginning the sampling before the delay period has elapsed, intermediate states of the surface emitting laser where it does not already emit the laser pulse in one of the two distinct laser modes are not sampled. The signals sampled after the delay period are, on their own, already binary signals in the sense that either the laser pulse in the first mode or the laser pulse in the second mode is output by the surface emitting laser which allows for a reliable and efficient digitization of the laser pulses into a sequence of random bits with better resilience to noise.

It can specifically be provided that the delay period is between 5ns to 20ns, or between 5ns to 15ns, or between 5ns to 10ns.

It is a finding of the present invention that a delay period of these lengths ensures sufficient stabilisation of the surface emitting laser so that it emits the full, or almost full, energy of the laser pulse in a single of the two modes, while, at the same time, ensuring high repetition frequencies, allowing for large amounts of random numbers (or random sequences of bits) being created.

It can further be provided that, for at least one laser pulse, a time period for which the surface emitting laser is driven below the lasing threshold is different from a time period for which the surface emitting laser is driven above the lasing threshold.

With this embodiment, the time between two subsequent laser pulses is shortened, increasing the number of laser pulses emitted per time period (for example per second), thereby also increasing the amount of random numbers being generated per second.

In a more specific embodiment, the time period for which the surface emitting laser is driven below the lasing threshold has a length that corresponds to 90% or less, or 80% or less, or 70% or less, or 50% or less of a length of the time period for which the surface emitting laser is driven above the lasing threshold.

Choosing a difference between the time period for which the surface emitting laser is driven below the lasing threshold and a time period for which the surface emitting laser is driven above the lasing threshold that is close to 1, allows for proper relaxation of the system when not lasing while, at the same time, ensuring that fluctuations between the modes while lasing are stabilised when sampling the signal. Shortening the time period for which the surface emitting laser is driven below the lasing threshold compared to the time period for which the surface emitting laser is driven above the lasing threshold reduces the time between adjacent laser pulses, thereby increasing the number of created random numbers or bits even though shortening too much the time for the system to relax can prevent the laser cavity to empty, thereby causing non-random signals.

In a further embodiment, the surface emitting laser is alternatingly driven below and above the lasing threshold with a switching frequency of at least 1MHz, or at least 100MHz, or at least 1GHz, or at least 10GHz. Thereby, generation of random bits or random numbers at high speed is achieved.

In one embodiment, the surface emitting laser is or comprises a vertical cavity surface emitting laser, VCSEL. VCSELs have been employed for some time now and can be obtained at comparably low costs, thereby reducing the costs while ensuring obtaining highly reliably random numbers.

The random number generator according to one embodiment of the invention comprises a surface emitting laser, a power source to drive the surface emitting laser, a control unit for controlling the power source and a photodetector for detecting laser pulses emitted from the surface emitting laser, wherein the random number generator is adapted to perform a method for generating random numbers according to any of the above embodiments.

With this system, generation of random numbers with the above described methods by employing commonly available surface emitting lasers is achieved, thereby reducing the complexity of physical random number generators and potentially also the costs involved.

In one embodiment, the random number generator further comprises a mode separator that is arranged, in propagation direction of the laser pulses from the surface emitting laser to the photodetector, between the surface emitting laser and the photodetector and is adapted to separate two distinct laser modes carrying the energy of the laser pulses emitted by the surface emitting laser and to allow one of the two distinct laser modes to propagate to the photodetector.

The respective other mode is, in one embodiment, not allowed to propagate to the photodetector, for example by filtering it in case the mode separator is implemented as a filter or by changing, by means of the mode separator, the propagation direction of the laser pulse depending on the mode in which the laser pulse is provided.

This realisation allows for separating the two distinct laser modes emitted by the surface emitting laser in order to translate them into random numbers or a random sequence of bits. While, in principle, it is possible to ignore or not further use one of the modes, but only use the respective other mode for creating random numbers or random bits, it is also possible to detect both modes emitted by the laser, for example, for reasons of controlling the reliability of the system.

In one embodiment, the surface emitting laser is or comprises a vertical cavity surface emitting laser, VCSEL. VCSELs have been employed for some time now and can be obtained at comparably low costs, thereby reducing the costs while ensuring obtaining highly reliably random numbers.

## Brief Description of the Drawings

Figure 1         shows a schematic depiction of a random number generator comprising a surface emitting laser for implementing a method according to one embodiment;

Figures 2a-2c     show an example of how to determine the bistability zone of a VCSEL;

Figures 3a-3b     show further aspects of the direct modulation mode.

## Detailed description

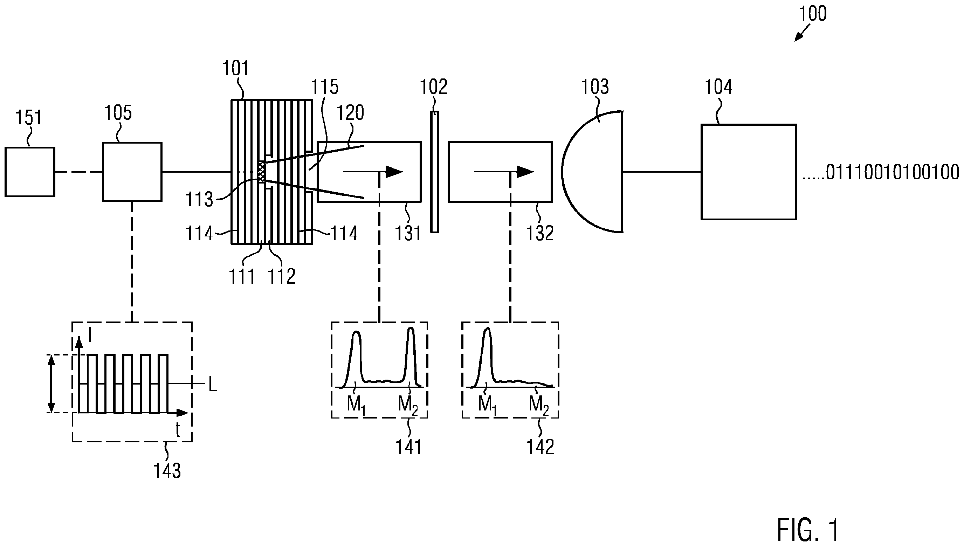

Figure 1 shows a random number generator 100 that is configured to implement a method according to embodiments of the invention, as will be explained in further detail below.

According to the depicted embodiment, the random number generator 100 comprises a surface emitting laser 101. The surface emitting laser may be provided in the form of a laser diode or other laser system that emits laser light from a surface of a semiconductor chip. This is in contrast to edge emitting lasers that emit laser light from edges of the semiconductor chip or an active region. One specific example of such surface emitting lasers are vertical cavity surface emitting lasers, also referred to as VCSEL herein. Reference will be made in the description that follows also to embodiments of VCSELs. This is, however, not understood to limit the invention to VCSELs only, but is only used for explanatory purposes. The embodiments described herein with respect to VCSELs are considered to also encompass other realizations of surface emitting lasers.

The random number generator further comprises a mode separator 102, a photodetector 103 and a power source 105 that is associated with a control unit for controlling the power source 105 to drive the surface emitting laser in a specific mode as will be explained in further detail below.

Though not mandatory, the random number generator may further comprise, in a propagation direction of a laser pulse 120 emitted by the surface emitting laser 101, one or more optical isolators 131 and 132. One of the optical isolators may be provided before the mode separator 102 and one of them may be provided after the mode separator 102 for preventing scattered light from the outside to enter the system and can increase the efficiency and reliability with which the random numbers can be generated. Specifically, the noise to the random signal, which is obtained at the photodetector 103 can be reduced by applying such an optical isolator 131 or 132.

The mode separator causes, as will be seen below one of two distinct modes of laser light emitted by the surface emitting laser to not reach the photodetector whereas the other mode of the two distinct laser modes is allowed to pass the photodetector. This is generally indicated with the diagram 141 before the mode separator and the diagram 142 after the mode separator 102. As will be explained below in more detail, the surface emitting laser is driven so that it randomly emits laser light in one of two distinct modes M1 and M2. These may differ, for example, with respect to a polarization direction or mean frequency or any other physical characteristic. The mode separator may be designed as a filter that blocks one of these modes. As is seen from diagram 142, the mode separator, in this embodiment, is arranged so as to prevent mode M2 from reaching the photodetector. Alternatively to filtering the mode M2, the mode separator may be provided so as to modify the propagation direction of the laser pulse 120 emitted by the surface emitting laser, depending on the mode M1 or M2 of the laser pulse, so that only a laser pulse with, for example, mode M1 is allowed to propagate to the photodetector 103 whereas the other mode M2 is not allowed to propagate into this direction but may, for example, propagate into the direction of a second, not shown photodetector.

Surface emitting lasers 101 are, as such, commonly known to the person skilled in the art. However, a brief description of their properties is given below.

In figure 1, the surface emitting laser is exemplified as a VCSEL 101 and generally comprises at least one laser cavity 111 that encompasses an active region 113. In the arrangement shown in Figure 1, the VCSEL comprises, on both sides (on the left and on the right in the depiction) and generally in planes that are parallel to the laser cavity 111, several mirrors 114 that together, in some embodiments of a VCSEL, may realise a Bragg-reflector. These mirrors 114 allow for internal reflection of light generated in the active region.

Moreover, as part of the VCSEL 101, there can be provided a confinement structure 112. This confinement structure allows for focussing laser light 120 that is emitted from the active region of the VCSEL.

Additionally, the VCSEL 101 comprises an emitting section 115 from which the laser light generated by the VCSEL is emitted and leaves the VCSEL into outer space. This "outer space" may generally be free space or an optical isolator 131 as already explained above or any other medium that is deemed suitable, like a glass fibre or a (transparent or semi-transparent) polymer fibre or any other optical fibre allowing for internal propagation of an optical signal like a laser pulse.

The above described general architecture of a VCSEL is, as already explained, known to the skilled person.

Though not explicitly depicted here, commonly available VCSELs and also other kinds of surface emitting lasers comprise a mode suppressing component or have mode suppressing characteristics that result in a suppression of one or more modes of laser light generated inside the surface emitting laser. This results in these suppressed modes not exiting in the surface emitting laser or not even being generated inside the surface emitting laser or surface emitting laser's active region. This structure realises that the whole energy output by the surface emitting laser is, under the known conditions, completely or almost completely carried by a single laser mode.

This has specific advantages when applying the surface emitting laser in communication technologies for, for example, transferring signals.

This mode suppression acts on the generation of laser pulses by the surface emitting laser by biasing the internal lasing characteristics towards the emission of laser light or laser pulses by a single mode.

According to the embodiment depicted in fig. 1, laser light or a laser pulse emitted from the emitting section 115 of the VCSEL (or other kind of surface emitting laser) then propagates towards the optional mode separator 102 and, after having passed the optional mode separator 102, is incident on the photodetector 103. The photodetector 103 is specifically adapted to detect laser pulses emitted by the VCSEL.

As is known to the person skilled in the art, the photodetector detects incident light and specifically, the incident number of photons, and translates this into an electrical signal of some strength. This electrical signal (for example a voltage or a current) can then be sampled, for example by the exemplarily shown digitization unit 104, and digitized so that, depending on the signal detected and output by the photodetector, the output of the digitization unit is either 1 or 0.

For this purpose, the digitalisation unit may be implemented as, or may comprise an analogue-to-digital-converter (ADC). This ADC can compare an input signal to a threshold and, if the input signal is larger than the threshold, the output of the ADC can be a 1 and, if the input signal is smaller than the threshold, the output of the ADC can be 0 or vice versa.

Thereby, during a sampling of the signal output by the photodetector by a digitization unit 104, it is possible to digitise the signal detected by the photodetector into bits of values of either 0 or 1.

For an application of the system so far described with a commonly known surface emitting laser, the photodetector would either always receive a laser pulse (in case the mode separator is adapted to let the mode by which the surface emitting laser emits the laser pulse pass in the direction of the photodetector) or it would never receive a laser pulse (in case the mode separator is adapted to not let the mode by which the surface emitting laser emits the laser pulse pass in the direction of the photodetector).

It is a finding of the present invention that, by employing a power source 105 in a specific way for driving the surface emitting laser, the surface emitting laser can be caused to arbitrarily emit a laser pulse in one of two distinct modes.

As already briefly explained above in this context, the random number generator as depicted in Figure 1, comprises a power source 105. This power source 105 is, according to the invention, adapted to drive the surface emitting laser in direct modulation mode. The direct modulation mode comprises driving the surface emitting laser alternatingly below and above the lasing threshold. This causes the surface emitting laser to emit laser light when driven above the lasing threshold and not to emit laser light when driven below the lasing threshold. The lasing threshold L is a characteristic of the surface emitting laser itself and takes a value depending on the surface emitting laser. This is depicted in the diagram 143 below the power source 105. As shown the current switches between values below the lasing threshold L and values above the lasing threshold where the surface emitting laser will emit laser light. Due to the alternate driving above and below the lasing threshold L, the power source 105 causes the surface emitting laser to emit laser pulses.

According to the invention, the power source 104 is associated with or controlled by a control unit 151 that controls the power source (like a microprocessor or any other suitable means for controlling the power source 105), so as to provide power to the surface emitting laser so that it is driven in the direct modulation mode where, according to the invention, a current above the lasing threshold L is chosen for driving the surface emitting laser above the lasing threshold so that the surface emitting laser works within a bistability zone of the surface emitting laser.

In this context, the bistability zone is a current regime or a current value that, when applied to the surface emitting laser, results in the surface emitting laser emitting laser pulses in one of two distinct laser modes M1 and M2, wherein, for each laser pulse, it is random in which laser mode the surface emitting laser will actually emit the laser pulse.

When driving the surface emitting laser, alternatingly, above and below the lasing threshold so that, when it is driven above the lasing threshold, it works in the bistability zone of the surface emitting laser, it cannot be predicted in which of the two distinct laser modes M1 and M2 the surface emitting laser will actually emit the laser pulse.

The distinct laser modes M1 and M2 may differ, for example, with respect to their polarisation axis or the mean frequency of the laser pulse, or in any other way. This allows for separating laser pulses emitted in the one mode from laser pulses emitted in the other mode using the mode separator 102 as already explained above.

In view of this, by using a suitable mode separator 102 to separate one of these modes specifically, it can be ensured that only one of the two distinct laser modes will actually arrive at the photodetector for detection.

This will result in laser pulses where the energy is carried by the first laser mode M1 impinging on the photodetector 103, whereas laser pulses where the energy is carried in the second laser mode M2, do not arrive at the photodetector 103 and, therefore, the photodetector does not recognise a corresponding signal.

Thus, depending on which mode M1 or M2 will actually carry the energy of the laser pulse, the photodetector 103 will either detect a signal corresponding to almost the full energy of the laser pulse or it will not detect any signal at all (apart from noise) because the energy of the laser pulse is carried by the mode that is separated by the mode separator 102 and thereby prevented from reaching the photodetector.

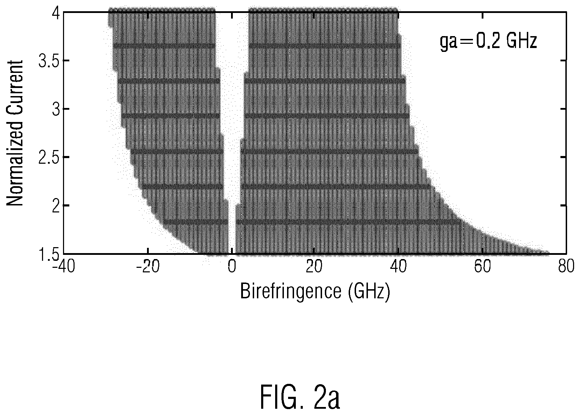

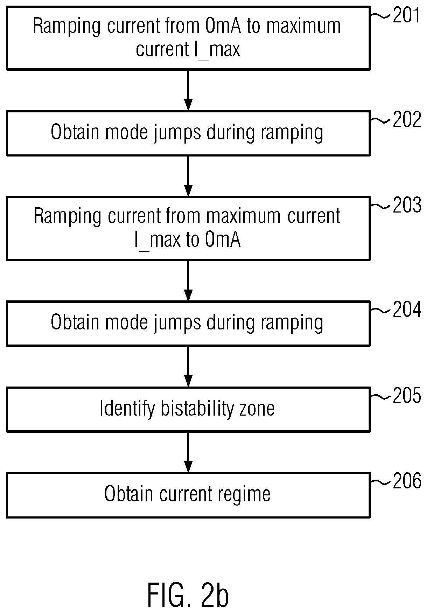

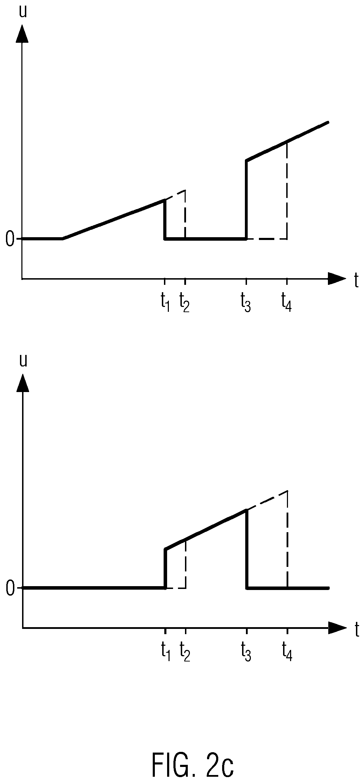

The current regime, which is realising that the surface emitting laser is actually driven in its bistability zone, depends on the physical characteristics of the surface emitting laser itself. How this bistability zone can be determined for example in the case of a VCSEL being used as surface emitting laser will be explained in relation to Figure 2 in more detail.

Before explaining how the bistability zone can be found, it is noted that one advantage of the present mode of driving the surface emitting laser in its bistability zone is that the obtained signal can easily be translated into a digital signal. This is because the signal detected by the photodetector 103 is already essentially digital in that the photodetector either detects a laser pulse having the (almost) full strength emitted by the surface emitting laser or does not detect any signal at all because the laser pulse is emitted in the laser mode that is separated away by the mode separator 102 after it has left the surface emitting laser.

This allows for almost arbitrarily setting the threshold for the digitization unit 105 as explained above, in case it is provided as ADC, at almost arbitrary levels from close to 0 to almost the full energy of the laser pulse. In order to account for slight deviations without diminishing the accuracy of the digitization, the threshold applied in the ADC can correspond to 50% of the full energy of the laser pulse.

Reference is now made to Figure 2 in order to show one way of determining the bistability regime of a given surface emitting laser that is realized as a VCSEL.

It is noted that this is only for explanatory purposes. The method described in relation to figure 2 can also be used for determining the bistability regime or the bistability zone for other surface emitting lasers. It may also, in some embodiments, be used for edge emitting lasers to determine potentially existing bistability zones of edge emitting lasers.

Before describing the process of determining the bistability zone in detail, reference is made to Figure 2a. Figure 2a shows fixed physical characteristics of a given VCSEL.

This refers, for example, to the dichroism (denoted with ga) and the birefringence of the VCSEL. For a given (normalized) input current, the white areas in the diagram of Figure 2a show regions where only one of the laser modes M1 or M2 exists. This means that in these white zones the VCSEL will either not emit laser light at all (for example because the current is too low) or it will emit laser light always in only one of the two modes M1 or M2. The shaded areas in fig. 2a show regions where both modes can exist and, therefore, when a current is applied that causes the VCSEL to be driven in the shaded zone, the laser pulse will be emitted in one of the two modes in which the VCSEL can work.

As the birefringence characteristics and the dichroism characteristics of a VCSEL are given by the material and more difficult to be changed, the current applied to the VCSEL is the easiest free variable that can be changed to determine the bistability zone of the VCSEL.

In one way of determining the bistability zone, the optical power output by the VCSEL depending on the actually applied current value can be measured by, for example, using the arrangement of fig. 1 except for the digitization unit and with an additional photodetector. In that case, the mode separator 102 will be provided so as to allow laser light emitted by the VCSEL being propagated to the first photodetector when it is in the first laser mode M1 and to the second photodetector when the laser light is emitted in the second laser mode M2. At each of these photodetectors, it is then possible to determine the optical power carried by each of the modes depending on the applied current.

Over some current areas, there will be no lasing at all, for example, because the current is too low for the VCSEL to actually start lasing. For other currents, there will always be lasing in only one of the two modes. It is, however, a finding of the present invention that a current region exists where the VCSEL works in its bistability zone as mentioned above.

A flow diagram of one method for finding the bistability zone is now described in relation to Figure 2b together with the further depictions in Figure 2c.

Beginning with the method according to Figure 2b, in order to identify the bistability zone, in a first step 201, over a time period T, the current applied to the VCSEL is ramped to a maximum value starting from 0 mA to a current value $I_{max}$. In that context, the current is a function of the time $t \in T$, i.e. I(t) and one example function may be that the current $I(t) = I_{max} \dfrac{t}{T}$. The value $I_{max}$ may be selected so as to not damage the VCSEL, but could generally take any value. It is, however, preferred to ramp the current from 0 mA to the maximum allowed current $I_{max}$ for the specific VCSEL under evaluation. Thereby, it can be ensured that all potential bistability zones within the allowed current regime of the VCSEL are identified.

During ramping of this current, the signals detected at the above described photodetectors can be evaluated. The photodetectors will output a voltage signal depending on the energy input. In Figure 2c, the left depiction shows the voltage U that is detected by the photodetector detecting the first mode of the VCSEL and the right depiction is showing the voltage U detected at the second photodetector that detects the second mode in which the VCSEL can lase. The drawn-through line in this context represents the "up-ramping" of the current for driving the VCSEL from 0 mA up to $I_{max}$ over the time period T in line with step 201.

The diagrams in Figure 2c show that, for the first mode, the optical power output by the VCSEL increases while the current increases until a time $t_1$ (corresponding to current value $I_1$). The output power then drops to 0 until time $T_3$ (corresponding to the current b) and then increases again, indicating that the VCSEL is again outputting laser light in the first mode.

For the second mode (right depiction in fig. 2c), it is determined during the ramping procedure that this mode does not provide any output power until the time $t_1$ (corresponding to the current $I_1$) and then starts lasing in the time period $t_1$ to $t_3$, corresponding to the currents $I_1$ to $I_3$. After that, i.e. current $I_3$, the output power of the VCSEL in this mode drops again to 0.

During the ramping of the current from 0 mA to $I_{max}$, for each of the two modes, thus two mode jumps can be identified at the times $t_1$ and $t_3$ which correspond to current values $I_1$ and $I_3$. At these current values, the VCSEL stops emitting laser light in one of the two modes and continues emitting laser light in the other mode.

It is noted that the determination or obtaining of the mode jumps in step 202 can be done either during the up-ramping or it can be done after the ramping procedure has been concluded by, for example, detecting and storing the respective voltage values detected by the respective photodetectors.

In the next step 203, the ramping is inverted, meaning that it starts with $I_{max}$ and then proceeds or is "ramped down" to the current 0mA. For easier identification in the diagrams according to Figure 2c, the time axis for this down-ramping is inverted to run from T to 0 by transforming the time t to T-t.

During this down-ramping procedure, mode jumps are once again obtained, either already while the ramping is performed or after that by having stored the associated optical power values (like the voltage U) obtained by the photodetectors in step 203.

The characteristics of the output power in the specific modes for the down-ramping are shown with the dashed line in the diagrams of fig. 2c. As is seen, during the down-ramping, the first mode experiences a mode jump at a time $t_4$ corresponding to a current $I_4$ that is larger than the current $I_3$. A second mode jump is experienced at the time $t_2$ corresponding to a current $I_2$ that is larger than the current $I_1$.

Between $t_4$ and $t_2$ or the associated currents, the first mode does not lase during the down-ramping. Correspondingly, at the time $t_4$, corresponding to the current $I_4$, the second mode starts lasing and continues lasing until the time $t_2$ corresponding to the current I2. At this point, a further mode jump of the second mode is observed and this mode stops lasing towards smaller currents.

Having determined the regions where mode jumps occur during up-ramping in steps 201 and 202 and during down-ramping in steps 203 and 204, the bistability zone can be obtained. This is because, during the different ramping procedures, the VCSEL experiences the increase or decrease in the current and therefore continues to either emit laser light in the one mode or in the other mode because it is not driven in pulse mode.

When, however, applying a current from within the current regime corresponding to the interval $I_1$ to $I_2$ or the current regime corresponding to the time interval $I_3$ and $I_4$ without applying a ramping as explained above, it cannot be predicted whether the VCSEL will emit laser light in the first mode or in the second mode.

Thus, from the ramping procedure described in association with the steps 201 to 204, the bistability zone is determined in step 205 for currents in the interval $I_1$ and $I_2$ and for currents in the interval $I_3$ and $I_4$.

Based on that, in step 206, the current or currents for driving the VCSEL in the bistability zone can be obtained.

It is noted that, within the thus determined bistability zone, there may be regions where the VCSEL is more likely to start lasing in one mode than in the other mode when the corresponding current is applied. By experimentation, it is possible to determine whether the probability for the VCSEL to lase in the one mode or the other mode is close to or exactly 50%. This can be done by, for example, causing the VCSEL to emit $10^6$ or $10^7$ or $10^8$ laser pulses at a given current within the bistability zone and determining how often the VCSEL emits a laser pulse in the first mode or in the second mode. Thereby, in order to determine the current that most reliably outputs laser pulses in either the first mode or the second mode with perfect random distribution, those currents can be selected where the chance of the VCSEL to emit the laser pulse either in the first mode or the second mode is close to or exactly 50%. With this current(s), the VCSEL can then be driven in the direct modulation mode so as to work in the bistability zone and reliably create laser pulses randomly in the first mode or in the second mode.

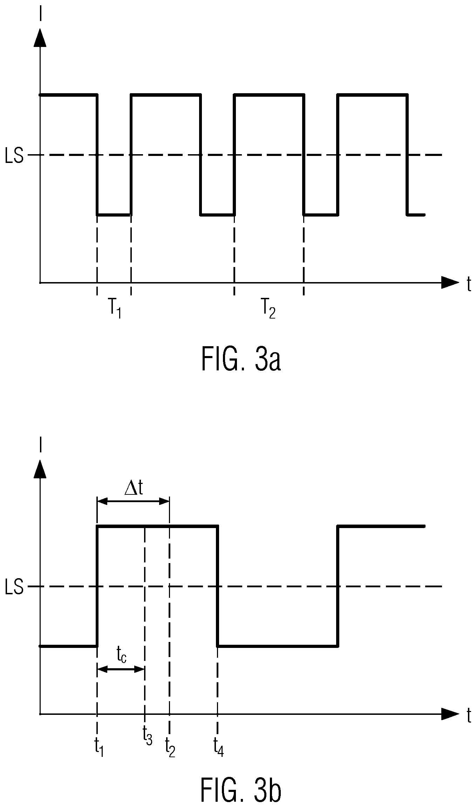

Having now described how the bistability zone can actually be obtained, it is explained in relation to Figure 3 below how the method of driving the surface emitting laser in the direct modulation mode can further be realized in preferred embodiments.

Figure 3a depicts a diagram showing the driving of the surface emitting laser in direct modulation mode above and below the lasing threshold.

The diagram according to Figure 3a shows the current I applied to the surface emitting laser over time t in arbitrary units, but specifically relative to the lasing threshold LS of the surface emitting laser. This lasing threshold, as already explained above, is the current value above which the surface emitting laser will emit laser light.

In the context of Figure 3a, current values below the lasing threshold LS are considered to drive the surface emitting laser below the lasing threshold and current values above the lasing threshold LS are current value that do not only drive the surface emitting laser above the lasing threshold, but realize the surface emitting laser to work in the bistability zone as already explained above with relation to Figure 1 and Figure 2. The current values above the lasing threshold are thus chosen so that the surface emitting laser works within its bistability zone. As the bistability zone is depending on the characteristic of the surface emitting laser actually employed, specific values are not given here. However, for commonly used surface emitting lasers, the currents applied may be in the order of some mA up to some 10 mA, for example between 5mA and 10mA or between 5mA and 20mA.

As is seen in this diagram, the surface emitting laser is driven below the lasing threshold for time periods $T_1$ and above the lasing thresholds for time periods $T_2$. According to some embodiments, these time periods can be identical, i.e. the surface emitting laser is driven below the lasing threshold for the same time as it is driven above the lasing threshold, so that 50% of the time the surface emitting laser is driven below the lasing threshold and does not lase and 50% of the time, the surface emitting laser is driven above the lasing threshold and emits laser pulses. Between consecutive intervals of driving the surface emitting laser below the lasing threshold, the surface emitting laser emits a laser pulse in one of the two distinct laser modes. This laser pulse will, after some initial relaxation oscillations or other dynamics inside the surface emitting laser, emit its full or almost full energy within one of the two distinct modes discussed above.

The values of the time interval $T_1$ for which the surface emitting laser is driven below the lasing threshold and the time interval $T_2$ for which the surface emitting laser is driven above the lasing threshold can, as already explained above, be identical.

However, according to some embodiments, and depending on the time required by the surface emitting laser to switch off, after having emitted a laser pulse, the time period $T_1$ for which the surface emitting laser is driven below the lasing threshold can also be selected to be different from the time period $T_2$ for which the surface emitting laser is driven above the lasing threshold. Generally, the surface emitting laser is driven at a given frequency f like, for example, 100MHz. This means that $10^8$ cycles of driving the surface emitting laser above the lasing threshold and below the lasing threshold are run through in one second. For each cycle or pulse, the time $T = T_1 + T_2$ is a fixed value, as it is reciprocal to the frequency f. However, it is possible to modulate the current signal for driving the surface emitting laser within each cycle so as to change the ratio of the times $T_1$ and $T_2$. By shortening the time period $T_1$, the time for which the surface emitting laser is driven above the lasing threshold (i.e. the time $T_2$) can be increased, thereby providing more time for the surface emitting laser to stabilize when emitting a laser pulse. This can be advantageous for ensuring reliable lasing of the surface emitting laser in one of the modes.

For example, it can be provided that the time period $T_1$ corresponds to only 90% of the time period $T_2$ or even less, for example, only 80% or 70% or even 50% or less. Depending on the characteristics of the surface emitting laser, the time period $T_1$ for which the surface emitting laser is driven below the lasing threshold can be much shorter than the time period $T_2$ for which the surface emitting laser is driven above the lasing threshold.

In Figure 3a, the increase of the current from below the lasing threshold to above the lasing threshold is shown as a vertical line where the applied current changes from the value below the lasing threshold "immediately" to a value above the lasing threshold that is within the bistability current regime of the surface emitting laser. As already indicated above, a preferably almost instantaneous increase of the current is preferred so that the surface emitting laser does not experience a ramping that could bias the surface emitting laser towards emitting a laser pulse in one of the two distinct laser modes.

However, in reality, there will necessarily be some ramp-up time because the current applied by the power source cannot be instantaneously increased.

However, in order to ensure that the mode in which the surface emitting laser emits the laser pulse is truly random, this ramp-up time (or switching time) should preferably be as small as possible, preferably less than 100ns and even more preferred less than 50ns. In one embodiment, the switching time may be between 100ps and 10ns whereas, in some other embodiments, it may be between 2 and 100ns or, preferably between 2ns and 50ns, or even more preferred between 5ns and 15ns. The preferred switching time for switching between a current below the lasing threshold and a current above the lasing threshold and within the bistability regime may depend on the actual surface emitting laser and its physical characteristics.

Additionally, the time for which the surface emitting laser is driven above the lasing threshold, i.e. the lasing period $T_2$, can be chosen to be between 2ns to 50ns. The lower limit of the lasing period $T_2$ may depend on physical characteristics of the surface emitting laser as will be explained in relation to Figure 3b below.

Figure 3b shows a further diagram in which the current applied to the surface emitting laser by the power source is depicted over time.

The intervals or the time periods for which the surface emitting laser is driven with a current below the lasing threshold LS or a current above the lasing threshold LS may be the same as were already explained in relation to Figure 3a.

Due to physical characteristics of the surface emitting laser, once the surface emitting laser starts lasing or is provided with a current above the lasing threshold, it will, at least for some time period, emit a laser pulse or signal that does not perfectly carry the energy within one of the two modes discussed so far even though a current within the bistability zone is applied. Rather, intermediate signals will become visible. This is because, when starting lasing, some time is required for the surface emitting laser to assume one of the stable states, i.e. a lasing state either in the first mode or in the second mode. The time period this process takes may be named a "competition time" $t_c$ and can be considered as the time the surface emitting laser needs to "decide" which of the modes will become stable and finally lase as laser pulse.

Considering Figure 3b, the competition time $t_c$ may be a time interval that takes from the time $t_1$ where the current I exceeds the lasing threshold and takes the value necessary for driving the surface emitting laser in the bistability zone until the time $t_3$, so that $t_c = t_3 - t_1$. Only after the time $t_3$, the laser pulse will reliably be emitted in one of the modes.

In order to reliably obtain random values by detecting laser pulses in either the first or the second mode, it is preferred that a sampling of a signal output by the photodetector upon detection of laser light is started by the digitization unit, after the competition time $t_c$ has elapsed. Therefore, in some embodiments, it may be provided that the sampling of a signal output by the photodetector (being it a current signal or a voltage signal) after the photodetector begins detecting a laser pulse at time $t_1$ will only start after a delay period $\Delta t$ which is sufficiently large so as to represent a point in time after the photodetector detects or begins detecting a laser pulse at time $t_1$ so that the surface emitting laser has finally dropped into one of the stable modes and, therefore, emits a laser pulse in one of these modes.

This requires that the total length of the laser pulse, which may be denoted as the difference $t_4 - t_1$, must be larger than the competition time $t_c$ by an amount that is sufficient for the digitization unit and the photodetector to actually detect and sample the output signal.

In view of this, and considering that the competition time is a characteristic of the surface emitting laser itself that cannot be easily changed, the total duration of the laser pulse $t_4 - t_1$ has a lower limit given by $t_c + \varepsilon$, where $\varepsilon$ denotes the time necessary for reliably detecting and sampling a signal from the laser pulse when it is emitted in one of the modes.

In order to take into account potential delays or imperfections in the relaxation of the surface emitting laser into one of the laser modes and a potential time variance of this process, it can be provided that the delay period $\Delta t$ is at least 10% or at least 20% or at least 30% larger than the competition time $t_c$ and in order to ensure for a reliable detection of a signal by the photodetector and corresponding digitization, the time for which the surface emitting laser is driven above the lasing threshold (i.e. $t_4 - t_1$) can be at least 40% or 50% or 60% larger than the competition time $t_c$.

In this context, it is noted that also the competition time $t_c$ is not a fixed value. Rather, the competition time is, at least to some degree, random in itself, meaning that the time that is required for the surface emitting laser to stably lase in one of the two modes can differ from one pulse to the other. However, the competition time can be regarded to represent a statistical mean value of all competition times $t_c$ of the surface emitting laser. Providing the delay period $\Delta t$ in the above range and using, as the competition time $t_c$ the mean value mentioned above can, for most applications, ensure that for almost all pulses the surface emitting laser stably lases in one of the two modes after the delay period $\Delta t$ has lapsed.

Exemplarily and reliably working delay periods range from 5ns to 20ns where specifically a range of 5ns to 15ns and 5ns to 10ns can be preferred. In view of this, the specific delay period $\Delta t$ that is applied does not only depend on the competition time period and a sufficiently large distance to the end of that period in time before starting the sampling, but it also depends on the intended repetition frequency of the pulses. While, as was discussed in relation to Figure 3a, the time periods $T_1$, for which the surface emitting laser is driven below the lasing threshold can be reduced to some degree, the repetition frequency of the laser pulses of course also depends on the total length of the laser pulses and, therefore, the closer the delay period $\Delta t$ is set to the competition time $t_c$, the shorter the pulse duration t4 - t1 can be.

In one embodiment, it can also be provided that the delay period $\Delta t$ is set equal to the competition time $t_c$ or even shorter than the competition time. In that case, it can be provided that the pulse duration is 1ns larger than the competition time $t_c$ and sampling is performed within this 1ns. Sampling at a time defined by the delay period having a value that is equal to or smaller than the competition time can result in the signal that is sampled not being perfectly binary or close to being binary. However, this can allow increasing the bit rate.

The above disclosure was described with respect to using surface emitting lasers, like VCSELs, to generate random numbers. Within the context of the present disclosure and combinable with each of the above embodiments, also methods and systems for employing the means for generating random numbers as detailed in the above embodiments are encompassed.

Specifically, by using the methods for generating random numbers and/or a random number generator as disclosed above, cryptographic methods and/or cryptographic systems can be realized. Such cryptographic methods and/or cryptographic systems which make use of the inventive method for generating random numbers and/or a random number generator according to the above embodiments can be used for encrypting communication, like for example in banking or governmental applications where sensitive data is transmitted over the internet or other potentially not secure communication channels from one location to another.

In this context, the methods and/or systems for generating random numbers as disclosed herein can be used to generate encryption keys or other means for encrypting the communication by using the obtained random numbers. Due to the intrinsic unpredictability of the random numbers generated with the methods and systems according to the embodiments disclosed herein, the security of communication encrypted with the thus generated keys against intruders can be increased. Moreover, as some embodiments allow for obtaining large amounts of random numbers or random bits, it is possible to also generate, in almost real-time, sufficiently long encryption keys in case large volumes of data need to be encrypted.

**Claims**

1. Method for generating random numbers, the method comprising driving, using a power source and a control unit controlling the power source, a surface emitting laser in direct modulation mode, wherein the direct modulation mode is controlled by the control unit so that the surface emitting laser is alternatingly driven below and above the lasing threshold so that laser pulses are emitted from the surface emitting laser, wherein, for driving the surface emitting laser above the lasing threshold, a current is chosen so that the surface emitting laser to work within a bistability zone of the surface emitting laser, and wherein the method comprises detecting, by a photodetector, the laser pulses emitted by the surface emitting laser and generating random numbers from the detected laser pulses.

2. Method according to claim 1, wherein the surface emitting laser emits laser pulses with energy carried substantially by one of two distinct laser modes.

3. Method according to claim 2, wherein the laser pulses pass, after being emitted from the surface emitting laser and before being detected by the photodetector, a mode separator that separates the two distinct laser modes and allows one of the two distinct laser modes to propagate to the photodetector.

4. Method according to any of claims 1 to 3, wherein a switching time for switching between the driving of the surface emitting laser below the lasing threshold and the driving of the surface emitting laser above the lasing threshold is between 100 ps and 10 ns, or between 2ns and 100ns, or between 2ns and 50ns, or between 5ns and 15ns.

5. Method according to any of claims 1 to 4, wherein the surface emitting laser is driven above the lasing threshold for a lasing period of 2ns to 50ns or 5ns to 25ns or 5ns to 20ns.

6. Method according to any of claims 1 to 5, wherein the method further comprises sampling a signal output by the photodetector upon detecting the laser pulse and wherein the sampling of the signal of the photodetector is started after a delay period has passed from the point in time where the surface emitting laser starts emitting the laser pulse.

7. Method according to claim 6, wherein the delay period is between 5ns to 20ns, or between 5ns to 15ns, or between 5ns to 10ns.

8. Method according to any of claims 1 to 7, wherein, for at least one laser pulse, a time period for which the surface emitting laser is driven below the lasing threshold is different from a time period for which the surface emitting laser is driven above the lasing threshold.

9. Method according to claim 8, wherein the time period for which the surface emitting laser is driven below the lasing threshold has a length that corresponds to 90% or less, or 80% or less, or 70% or less, or 50% or less of a length of the time period for which the surface emitting laser is driven above the lasing threshold.

10. Method according to any of claims 1 to 9, wherein the surface emitting laser is alternatingly driven below and above the lasing threshold with a switching frequency of at least 1MHz, or at least 100MHz, or at least 1GHz, or at least 10GHz.

11. The method according to any of claims 1 to 10, wherein the surface emitting laser is or comprises a vertical cavity surface emitting laser, VCSEL.

12. Random number generator comprising a surface emitting laser, a power source to drive the surface emitting laser, a control unit for controlling the power source and a photodetector for detecting laser pulses emitted from the surface emitting laser, wherein the random number generator is adapted to perform a method for generating random numbers according to any of claims 1 to 11.

13. Random number generator according to claim 12, further comprising a mode separator that is arranged, in propagation direction of the laser pulses from the surface emitting laser to the photodetector, between the surface emitting laser and the photodetector and is adapted to separate two distinct laser modes carrying the energy of the laser pulses emitted by the surface emitting laser and to allow one of the two distinct laser modes to propagate to the photodetector.

14. Random number generator according to claim 12 or 13, wherein the surface emitting laser is or comprises a vertical cavity surface emitting laser, VCSEL.

FIG. 1

EP 4 178 052 A1

FIG. 2a

Ramping current from 0mA to maximum current I_max ~201

Obtain mode jumps during ramping ~202

Ramping current from maximum current I_max to 0mA ~203

Obtain mode jumps during ramping ~204

Identify bistability zone ~205

Obtain current regime ~206

FIG. 2b

FIG. 2c

FIG. 3a

FIG. 3b

Europäisches
Patentamt

European
Patent Office

Office européen
des brevets

# EUROPEAN SEARCH REPORT

Application Number

EP 21 38 3000

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 106 301 754 A (UNIV TAIYUAN TECHNOLOGY) 4 January 2017 (2017-01-04) * paragraphs [0007] – [0029], [0033]; figures 1-3 * | 1-14 | INV. H01S5/062 G06F7/58 H01S5/183 |
| A | EP 3 709 456 A1 (FUNDACIO INST DE CIÈNCIES FOTÒNIQUES [ES] ET AL.) 16 September 2020 (2020-09-16) * the whole document * | 1,12 | ADD. H04L9/08 |
| A | M-Y ZHU ET AL: "Random number generation based on polarization mode noise of vertical-cavity surface-emitting lasers", LASER PHYSICS LETTERS, vol. 9, no. 11, 26 October 2012 (2012-10-26), pages 775-780, XP055551136, Germany ISSN: 1612-2011, DOI: 10.7452/lapl.201210076 * the whole document * | 1,12 | |

TECHNICAL FIELDS SEARCHED (IPC)

H01S
G06F
H04L

The present search report has been drawn up for all claims

| Place of search | Date of completion of the search | Examiner |
|---|---|---|
| Munich | 7 April 2022 | Riechel, Stefan |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
........................................................................
& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 21 38 3000

This annex lists the patent family members relating to the patent documents cited in the above-mentioned European search report.
The members are as contained in the European Patent Office EDP file on
The European Patent Office is in no way liable for these particulars which are merely given for the purpose of information.

07-04-2022

| Patent document cited in search report | | Publication date | Patent family member(s) | | | Publication date |
|---|---|---|---|---|---|---|
| CN 106301754 | A | 04-01-2017 | NONE | | | |
| EP 3709456 | A1 | 16-09-2020 | CN | 111344916 | A | 26-06-2020 |
| | | | EP | 3709456 | A1 | 16-09-2020 |
| | | | KR | 20200074981 | A | 25-06-2020 |
| | | | US | 2021216284 | A1 | 15-07-2021 |
| | | | WO | 2019086730 | A1 | 09-05-2019 |

EPO FORM P0459

For more details about this annex : see Official Journal of the European Patent Office, No. 12/82